# EUROPÄISCHE PATENTANMELDUNG

(11) **EP 1 039 284 A1**
(43) Veröffentlichungstag der Anmeldung: **27.09.2000**
(21) Anmeldenummer: 99105939.5
(22) Anmeldetag: 24.03.1999
(51) Int. Cl.: G01L 9/00

(54) **Kapazitiver Drucksensor bzw. kapazitiver Differenzdrucksensoren**

(71) Anmelder: ENVEC Mess- und Regeltechnik GmbH + Co., 79576 Weil am Rhein (DE)
(72) Erfinder: Drewes, Ulfert, 79379 Müllheim (DE); Rossberg, Andreas Dr., 79713 Bad Säckingen (DE); Schmidt, Elke Dipl.-Phys., 79650 Schopfheim (DE); Hegner, Frank Dr., 79540 Lörrach (DE); Velten, Thomas Dipl.-Phys., 79664 Wehr (DE)
(74) Vertreter: Morstadt, Volker Dipl.-Ing.

(57) **Zusammenfassung**

Die Elektroden dieser (Differenz)Drucksensoren sind auf andere Art als durch Siebdrucken oder Sputtern hergestellt. Hierzu hat der einen Grundkörper (1) mit einer ersten und einer zweiten Oberfläche (11, 12) sowie einer Umfangsfläche (13). Eine plattenförmige Elektrode (14) aus einem elektrisch leitfähigen Material ist in einer in der Oberfläche (11) gebildeten Ausnehmung (15) mittels eines Fügematerials (16) hochdruckfest und hochvakuumdicht befestigt ist. Eine Durchkontaktierung (17) führt durch den Grundkörper (1) hindurch von der Elektrode (14) zur Oberfläche (12) oder zur Umfangsfläche (13). Eine Membran (2) ist auf dem Grundkörper (1) außerhalb der Ausnehmung (15) entlang einer Fügestelle (18) mittels eines Fügematerials (26) befestigt ist und bildet entweder selbst eine zweite Elektrode bildet oder ist auf einer der Elektrode (14) zugewandten Oberfläche mit einer zweiten Elektrode (24) bedeckt, die durch die Fügestelle (18) hindurch kontaktiert ist. Grundkörper und Membran bestehen aus einer Keramik, aus einem Glas oder aus einem einkristallinen Material.

## Beschreibung

Die Erfindung betrifft kapazitive Drucksensoren oder kapazitive Differenzdrucksensoren.

Üblicherweise umfaßt ein derartiger Drucksensor einen aus einer Keramik, aus einem Glas oder aus einem einkristallinen Material, z.B. Saphir, bestehenden Grundkörper und eine aus einer Keramik, aus einem Glas oder aus einem einkristallinen Material, z.B. Saphir, bestehende Membran, die den Grundkörper überdeckt und davon so beabstandet ist, daß zwischen der Membran und einer ihr zugewandten Fläche des Grundkörpers eine Meßkammer gebildet wird.

Die einander zugewandten Flächen von Grundkörper und Membran sind mit Elektroden versehen, von denen jeweils zwei einander gegenüberliegende Elektroden einen Kondensator bilden und die z.B. durch Sputtern aufgebracht werden können.

Wenn auf die Membran, die elastisch ist, ein sie verformender Druck eines Prozeßmediums einwirkt, ändert sich der Abstand zwischen den Elektroden, so daß sich auch die Kapazität des erwähnten Kondensators ändert. Diese Kapazitätsänderung ist ein den Druck abbildendes elektrisches Signal, das in einer Auswerte-Elektronik weiterverarbeitet werden kann.

So ist z.B. in der US-A 50 50 035 ein kapazitiver Drucksensor beschrieben, der umfaßt:
- einen Grundkörper aus einer Aluminiumoxid-Keramik mit einer ersten und einer zweiten Oberfläche sowie einer Umfangsfläche,
- eine erste Elektrode aus einem elektrisch leitfähigen Material auf der ersten Oberfläche,
- eine durch den Grundkörper hindurch von der ersten Elektrode zur zweiten Oberfläche führende erste Durchkontaktierung,
- eine Membran aus einer Aluminiumoxid-Keramik, die
   -- auf dem Grundkörper entlang einer Fügestelle mittels eines Fügematerials befestigt ist und
   -- auf einer der ersten Elektrode zugewandten Oberfläche mit einer zweiten Elektrode bedeckt ist,
      --- die über die Fügestelle und eine damit verbundene, zur zweiten Oberfläche führende zweite Durchkontaktierung kontaktiert ist,
- wobei die Elektroden, die Durchkontaktierungen und das Fügematerial aus einer im Siebdruckverfahren aufgebrachten Widerstands- oder Leitpaste bestehen.

Zum Messen einer Differenz zweier Drücke, im folgenden als Differenzdruck bezeichnet, wird üblicherweise für jeden Druck eine Meßkammer verwendet, wobei die Meßkammern untereinander räumlich und mechanisch verbunden und jeweils mit mindestens einer Meßkapazität ausgestattet sind. Auf diese Weise ist es möglich, ein elektrisches Signal zu erzeugen, das der Differenz aus einem auf die eine Meßkammer wirkenden Druck und eines auf die andere Meßkammer wirkenden Drucks entspricht.

Sowohl das Aufbringen der Elektroden mittels der erwähnten Siebdrucktechnik als auch das Aufsputtern der Elektroden ist apparativ sehr aufwendig, da z.B. letzteres eine Vakuumapparatur erforderlich macht. Außerdem müssen bei beiden Verfahren Masken verwendet werden, mit denen die Form der Elektroden festgelegt wird.

Es ist daher eine Aufgabe der Erfindung, kapazitive Drucksensoren bzw. kapazitiven Differenzdrucksensoren anzugeben, bei denen die Elektroden auf andere Art als durch Siebdrucken oder Sputtern hergestellt sind.

Zur Lösung dieser Aufgabe besteht eine erste Variante der Erfindung in einem kapazitiven Drucksensor, der umfaßt:
- einen Grundkörper aus einer Keramik, aus einem Glas oder aus einem einkristallinen Material mit einer ersten und einer zweiten Oberfläche sowie einer Umfangsfläche,
- eine plattenförmige erste Elektrode aus einem elektrisch leitfähigen Material,
   -- die in einer in der ersten Oberfläche gebildeten Ausnehmung mittels eines ersten Fügematerials hochdruckfest und hochvakuumdicht befestigt ist,
- eine durch den Grundkörper hindurch von der ersten Elektrode zur zweiten Oberfläche oder zur Umfangsfläche führende Durchkontaktierung,
- eine Membran aus einer Keramik, aus einem Glas oder aus einem einkristallinen Material, die
   -- auf dem Grundkörper außerhalb der Ausnehmung entlang einer Fügestelle mittels eines zweiten Fügematerials befestigt ist und
   -- entweder selbst eine zweite Elektrode bildet
   -- oder auf einer der ersten Elektrode zugewandten Oberfläche mit einer zweiten Elektrode bedeckt ist,
      --- die durch die Fügestelle hindurch kontaktiert ist.

Zur Lösung der genannten Aufgabe besteht eine zweite Variante der Erfindung in einem kapazitiven Differenzdrucksensor, der umfaßt:
- einen ersten Grundkörper aus einer Keramik, aus einem Glas oder aus einem einkristallinen Material mit einer ersten und einer zweiten Oberfläche sowie einer Umfangsfläche,
- eine plattenförmige erste Elektrode aus einem elektrisch leitfähigen Material,
   -- die in einer in der ersten Oberfläche gebildeten ersten Ausnehmung mittels eines ersten Fügematerials hochdruckfest und hochvakuumdicht befestigt ist,
- eine durch den ersten Grundkörper hindurch von der ersten Elektrode zur zweiten Oberfläche oder zur Umfangsfläche führende erste Durchkontaktierung,
- einen zweiten Grundkörper aus einer Keramik, aus einem Glas oder aus einem einkristallinen Material mit einer ersten und einer zweiten Oberfläche sowie einer Umfangsfläche,
- eine plattenförmige zweite Elektrode aus einem elektrisch leitfähigen Material,
   -- die in einer in der ersten Oberfläche des zweiten Grundkörpers gebildeten zweiten Ausnehmung mittels des ersten Fügematerials hochdruckfest und hochvakuumdicht befestigt ist,
- eine durch den zweiten Grundkörper hindurch von der zweiten Elektrode zu dessen zweiter Oberfläche oder zu dessen Umfangsfläche führende zweite Durchkontaktierung,
- eine Membran aus einer Keramik, aus einem Glas oder aus einem einkristallinen Material, die
   -- auf dem ersten Grundkörper außerhalb der ersten Ausnehmung entlang einer ersten Fügestelle mittels eines zweiten Fügematerials befestigt ist,
   -- auf dem zweiten Grundkörper außerhalb der zweiten Ausnehmung entlang einer zweiten Fügestelle mittels des zweiten Fügematerials befestigt ist,
   -- entweder selbst eine dritte Elektrode bildet
   -- oder auf einer der ersten Elektrode zugewandten Oberfläche mit einer dritten Elektrode bedeckt ist,
      --- die durch die erste Fügestelle hindurch kontaktiert ist, und
   -- auf einer der zweiten Elektrode zugewandten Oberfläche mit einer vierten Elektrode bedeckt ist,
      --- die durch die zweite Fügestelle hindurch kontaktiert ist.

Zur Lösung der genannten Aufgabe besteht eine dritte Variante der Erfindung in einem kapazitiven Differenzdrucksensor, der umfaßt:
- einen Grundkörper aus einer Keramik, aus einem Glas oder aus einem einkristallinen Material mit einer ersten und einer zweiten Oberfläche sowie einer Umfangsfläche,
- eine plattenförmige erste Elektrode aus einem elektrisch leitfähigen Material,
   -- die in einer in der ersten Oberfläche gebildeten ersten Ausnehmung mittels eines ersten Fügematerials hochdruckfest und hochvakuumdicht befestigt ist,
- eine plattenförmige zweite Elektrode aus einem elektrisch leitfähigen Material,
   -- die in einer in der zweiten Oberfläche gebildeten zweiten Ausnehmung mittels des ersten Fügematerials hochdruckfest und hochvakuumdicht befestigt ist,
- eine durch den Grundkörper hindurch von der ersten Elektrode zur Umfangsfläche führende erste Durchkontaktierung,
- eine durch den Grundkörper hindurch von der zweiten Elektrode zur Umfangsfläche führende, von der ersten Durchkontaktierung getrennte zweite Durchkontaktierung,
- eine erste Membran aus einer Keramik, aus einem Glas oder aus einem einkristallinen Material, die
   -- auf dem Grundkörper außerhalb der ersten Ausnehmung entlang einer ersten Fügestelle mittels eines zweiten Fügematerials befestigt ist und
   -- entweder selbst eine dritte Elektrode bildet
   -- oder auf einer der ersten Elektrode zugewandten Oberfläche mit einer dritten Elektrode bedeckt ist,
      --- die durch die erste Fügestelle hindurch kontaktiert ist, und
- eine zweite Membran aus einer Keramik, aus einem Glas oder aus einem einkristallinen Material, die
   -- auf dem Grundkörper außerhalb der zweiten Ausnehmung entlang einer zweiten Fügestelle mittels des zweiten Fügematerials befestigt ist und
   -- entweder selbst eine vierte Elektrode bildet
   -- oder auf einer der zweiten Elektrode zugewandten Oberfläche mit einer vierten Elektrode bedeckt ist,
      --- die durch die zweite Fügestelle hindurch kontaktiert ist.

Nach einer jeweiligen bevorzugten ersten Ausgestaltung der Erfindung bestehen die plattenförmige Elektrode bzw. die plattenförmigen Elektroden aus einem Metall, dessen thermischer Ausdehnungskoeffizient an den der Keramik bzw. des Glases angepaßt ist.

Nach einer jeweiligen bevorzugten zweiten Ausgestaltung der Erfindung bestehen die plattenförmige Elektrode bzw. die plattenförmigen Elektroden aus einer elektrisch leitfähigen Keramik oder einem elektrisch leitfähigen Glas.

Nach einer bevorzugten anderen Ausgestaltung der zweiten Ausgestaltung der Erfindung ist die elektrisch leitfähige Keramik ein Cermet.

Nach einer bevorzugten weiteren Ausgestaltung der zweiten Ausgestaltung der Erfindung ist die elektrisch leitfähige Keramik eine Dispersionskeramik.

Nach noch einer weiteren bevorzugten Ausgestaltung der zweiten Ausgestaltung der Erfindung bestehen die plattenförmige Elektrode bzw. die plattenförmigen Elektroden aus Siliciumcarbid, Titancarbid, Titannitrid, Titandiborid, Molybdändisilicid, Wolframcarbid oder Zirconiumcarbid.

Nach einer bevorzugten anderen Ausgestaltung der zweiten Ausgestaltung der Erfindung sind die Elektroden ohne erstes Fügematerial eingesintert.

Ein Vorteil der Erfindung besteht darin, daß Bohrungen im Grundkörper, z.B. für die Durchkontaktierungen oder für Ölfüllungen, nicht mehr wie beim eingangs genannten Stand der Technik hochdruckfest und hochvakuumdicht zu sein brauchen. Ferner kann der Durchmesser solcher Bohrungen im Grundkörper größer als bei den vorbeschriebenen Drucksensoren bzw. Differenzdrucksensoren gewählt werden, so daß diese Bohrungen einfacher, z.B. durch Trockenpressen an einem ungesinterten Grünkörper des Grundkörpers, hergestellt werden können.

Die Erfindung wird nun anhand von Ausführungsbeispielen näher erläutert, die in den Figuren der Zeichnung nichtmaßstäblich dargestellt sind. Gleiche Teile sind in allen Figuren mit denselben Bezugszeichen versehen; wenn es die Übersichtlichkeit erfordert, wird auf bereits erwähnte Bezugszeichen in nachfolgenden Figuren verzichtet.
- Fig. 1: zeigt schematisch im Schnitt einen Grundkörper eines kapazitiven Drucksensors entsprechend der ersten Variante der Erfindung,
- Fig. 2: zeigt schematisch im Schnitt den durch eine Membran zu einem kapazitiven Drucksensor ergänzten Grundkörper der Fig. 1,
- Fig. 3: zeigt schematisch im Schnitt einen kapazitiven Differenzdrucksensor mit einer einzigen Membran und zwei Grundkörpern entsprechend der zweiten Variante der Erfindung, und
- Fig. 4: zeigt schematisch im Schnitt einen kapazitiven Differenzdrucksensor mit zwei Membranen und einem einzigen Grundkörper entsprechend der dritten Variante der Erfindung.

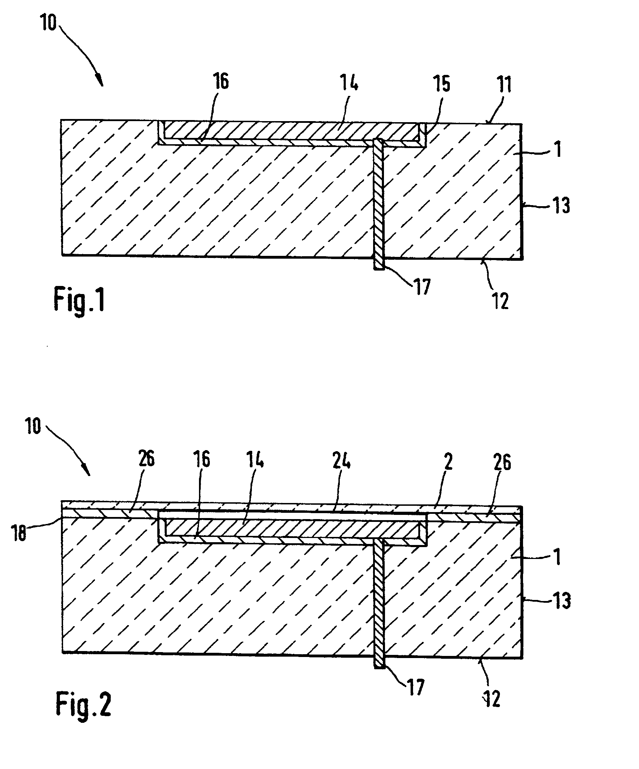

In Fig. 1 ist schematisch im Schnitt ein Grundkörper 1 eines kapazitiven Drucksensors 10 entsprechend der ersten Variante der Erfindung dargestellt. Der Grundkörper 1 hat eine erste Oberfläche 11 und eine zweite Oberfläche 12 sowie eine Umfangsfläche 13.

Eine plattenförmige erste Elektrode 14 aus einem elektrisch leitfähigen Material ist in einer in der ersten Oberfläche 11 gebildeten Ausnehmung 15 mittels eines ersten Fügematerials 16 hochdruckfest und hochvakuumdicht befestigt.

Durch den Grundkörper 1 führt von der Elektrode 14 zur zweiten Oberfläche 12 eine Durchkontaktierung 17 hindurch, mittels der die Elektrode 14 von außen her elektrisch zugänglich gemacht ist. Anstatt zur Oberfläche 12 kann die Durchkontaktierung 17 auch zur Umfangsfläche 13 führen.

In Fig. 2 ist schematisch im Schnitt der durch eine Membran 2 zum kapazitiven Drucksensor 10 ergänzte Grundkörper 1 von Fig. 1 dargestellt. Die Membran 2 ist auf dem Grundkörper 1 außerhalb der Ausnehmung 15 entlang einer Fügestelle 18 mittels eines zweiten Fügematerials 26 befestigt.

Die Membran 2 bildet entweder selbst eine zweite Elektrode oder ist auf einer der ersten Elektrode 14 zugewandten Oberfläche mit einer zweiten Elektrode 24 bedeckt. In jedem dieser beiden Fälle ist die Elektrode 24 durch die Fügestelle 18 hindurch kontaktiert, was in Fig. 2 jedoch nicht dargestellt werden kann. Somit ist auch die Elektrode 24 von außen her elektrisch zugänglich und der von den Elektroden 14, 24 gebildete Kondensator kann an eine Auswerte-Elektronik angeschlossen werden.

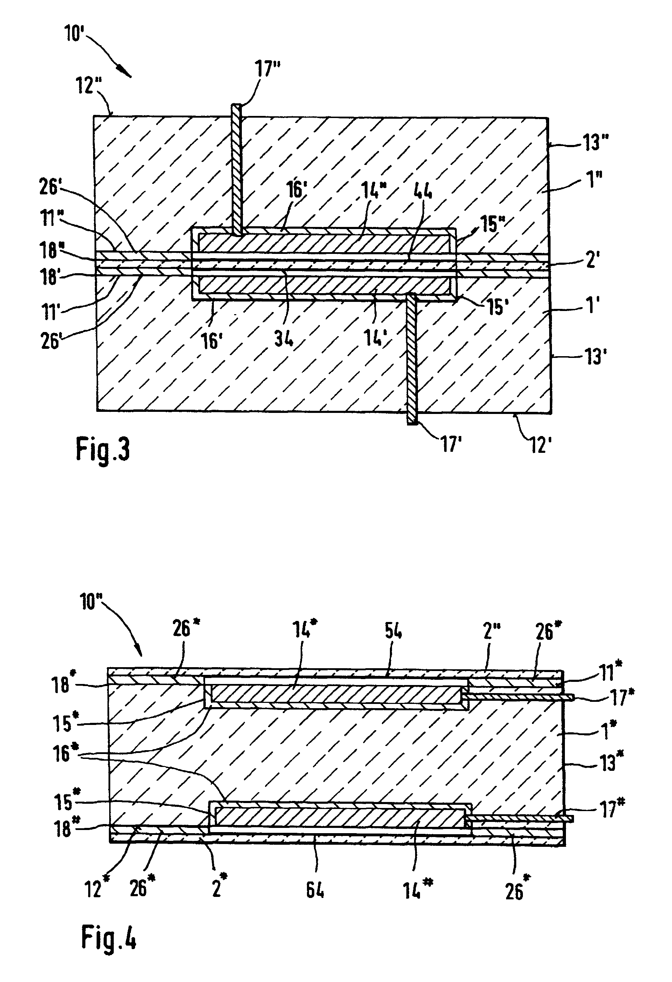

In Fig. 3 ist schematisch im Schnitt ein kapazitiver Differenzdrucksensor 10' mit einer einzigen Membran 2' und zwei Grundkörpern 1', 1" entsprechend der zweiten Variante der Erfindung dargestellt. Jeder Grundkörper 1' bzw. 1" besteht aus einer Keramik, aus einem Glas oder aus einem einkristallinen Material und hat eine erste Oberfläche 11'bzw. 11", eine zweite Oberfläche 12' bzw. 12" und eine Umfangsfläche 13' bzw. 13.

Eine plattenförmige erste Elektrode 14' aus einem elektrisch leitfähigen Material ist in einer in der ersten Oberfläche 11' gebildeten Ausnehmung 15' des Grundkörpers 1' mittels eines ersten Fügematerials 16' hochdruckfest und hochvakuumdicht befestigt.

Durch den Grundkörper 1' führt von der Elektrode 14' zur zweiten Oberfläche 12' eine Durchkontaktierung 17' hindurch, mittels der die Elektrode 14' von außen her elektrisch zugänglich gemacht ist. Anstatt zur Oberfläche 12' kann die Durchkontaktierung 17' auch zur Umfangsfläche 13' führen.

Eine plattenförmige zweite Elektrode 14" aus einem elektrisch leitfähigen Material ist in einer in der ersten Oberfläche 11" gebildeten Ausnehmung 15" des Grundkörpers 1" mittels des ersten Fügematerials 16" hochdruckfest und hochvakuumdicht befestigt.

Durch den Grundkörper 1" führt von der Elektrode 14" zur zweiten Oberfläche 12" eine Durchkontaktierung 17" hindurch, mittels der die Elektrode 14" von außen her elektrisch zugänglich gemacht ist. Anstatt zur Oberfläche 12" kann die Durchkontaktierung 17" auch zur Umfangsfläche 13" führen. Die Durchkontaktierung 17" hat keinerlei elektrisch Verbindung mit der Durchkontaktierung 17'

Die Membran 2' ist auf dem Grundkörper 1' außerhalb der Ausnehmung 15' entlang einer Fügestelle 18' mittels eines zweiten Fügematerials 26' befestigt. Die Membran 2' ist ferner auf dem Grundkörper 1" außerhalb der Ausnehmung 15" entlang einer Fügestelle 18" mittels des zweiten Fügematerials 26' befestigt.

Die Membran 2' bildet entweder selbst eine dritte Elektrode oder ist auf einer der ersten Elektrode 14" zugewandten Oberfläche mit einer dritten Elektrode 34 und auf einer der zweiten Elektrode 14" zugewandten Oberfläche mit einer vierten Elektrode 44 bedeckt.

Im erstgenannten Fall, in dem die Membran 2' selbst die dritte Elektrode bildet, ist diese durch die Fügestelle 18' und/oder durch die Fügestelle 18" hindurch kontaktiert. Im zweitgenannten Fall, in dem die Membran 2' mit der dritten Elektrode 34 und der vierten Elektrode 44 bedeckt ist, ist die Elektrode 34 durch die Fügestelle 18' und die Elektrode 44 durch die Fügestelle 18" hindurch kontaktiert. Somit sind auch die dritte Elektrode bzw. die Elektroden 34, 44 von außen her elektrisch zugänglich und die von der Elektrode 14' und der dritten Elektrode bzw. der Elektrode 14" und der dritten Elektrode bzw. den Elektroden 14', 34 bzw. 14", 34 gebildeten Kondensatoren können an eine Auswerte-Elektronik angeschlossen werden.

In Fig. 4 ist schematisch im Schnitt ein kapazitiver Differenzdrucksensor mit zwei Membranen 2", 2* und einem einzigen Grundkörper 1* entsprechend der dritten Variante der Erfindung dargestellt. Der Grundkörper 1* hat eine erste Oberfläche 11* und eine zweite Oberfläche 12* sowie eine Umfangsfläche 13*.

Eine plattenförmige erste Elektrode 14* aus einem elektrisch leitfähigen Material ist in einer in der ersten Oberfläche 11* gebildeten Ausnehmung 15* mittels eines ersten Fügematerials 16* hochdruckfest und hochvakuumdicht befestigt.

Eine plattenförmige zweite Elektrode 14^{#} aus einem elektrisch leitfähigen Material ist in einer in der zweiten Oberfläche 12* gebildeten Ausnehmung 15^{#} mittels des ersten Fügematerials 16* hochdruckfest und hochvakuumdicht befestigt.

Durch den Grundkörper 1* führt von der Elektrode 14* zur Umfangsfläche 13* eine erste Durchkontaktierung 17* und von der Elektrode 14^{#} zur Umfangsfläche 13* eine zweite Durchkontaktierung 17^{#} hindurch, mittels der die jeweilige Elektrode 14* bzw.14^{#} von außen her elektrisch zugänglich gemacht sind. Die beiden Durchkontaktierung 17*, 17^{#} sind voneinander elektrisch isoliert.

Die erste Membran 2" ist auf dem Grundkörper 1* außerhalb der Ausnehmung 15* entlang einer Fügestelle 18* mittels eines zweiten Fügematerials 26* befestigt. Die Membran 2" bildet entweder selbst eine dritte Elektrode oder ist auf einer der ersten Elektrode 14* zugewandten Oberfläche mit einer dritten Elektrode 54 bedeckt. In jedem dieser beiden Fälle ist die Elektrode 54 durch die Fügestelle 18* hindurch kontaktiert. Somit ist auch die Elektrode 54 von außen her elektrisch zugänglich und der von den Elektroden 14*, 54 gebildete Kondensator kann an eine Auswerte-Elektronik angeschlossen werden.

Die zweite Membran 2* ist auf dem Grundkörper 1* außerhalb der Ausnehmung 15^{#} entlang einer Fügestelle 18^{#} mittels des Fügematerials 26* befestigt. Die Membran 2* bildet entweder selbst eine vierte Elektrode oder ist auf einer der zweiten Elektrode 14^{#} zugewandten Oberfläche mit einer vierten Elektrode 64 bedeckt. In jedem dieser beiden Fälle ist die Elektrode 64 durch die Fügestelle 18^{#} hindurch kontaktiert. Somit ist auch die Elektrode 64 von außen her elektrisch zugänglich und der von den Elektroden 14^{#}, 64 gebildete Kondensator kann an eine Auswerte-Elektronik angeschlossen werden.

Bei der Erfindung besteht der Grundkörper bzw. bestehen die Grundkörper aus einer Keramik, z.B. aus einer Aluminiumoxid-Keramik mit 96 Gew.% Al₂O₃, aus einem Glas oder aus einem einkristallinen Material. Auch die Membran bzw. die Membranen bestehen aus einem dieser Materialien.

Die plattenförmigen Elektroden 14, 14', 14", 14*, 14^{#} können einerseits aus einem Metall bestehen, dessen thermischer Ausdehnungskoeffizient an den der Keramik bzw. des Glases angepaßt ist. Hierfür eignet sich z.B. eines der Metalle Ruthenium, Rhodium, Palladium, Osmium, Platin, Wolfram, Molybdän allein oder eine Legierung dieser Metalle.

Als Fügematerial für die hochdruckfeste und hochvakuumdichte Fixierung derartiger Metall-Elektroden in der entsprechenden Ausnehmung 15 bzw. 15*, 15^{#} bzw. 15', 15" des Grundkörpers 1, 1* bzw. der Grundkörper 1', 1" können ein metallisches Lot, z.B. ein Aktivhartlot, ein elektrisch leitfähiger Kleber, ein Kunststoff oder eine Glasfritte verwendet werden.

Die plattenförmigen Elektroden 14, 14', 14", 14*, 14^{#} können andererseits aus einer elektrisch leitfähigen Keramik, insb. einem Cermet, aus einer Dispersionskeramik, aus Siliciumcarbid, aus Titancarbid, aus Titannitrid, aus Tiandiborid, aus Molybdändisilicid, aus Wolframcarbid, aus Zirconiumcarbid oder aus einem elektrisch leitfähigen Glas bestehen.

Ein Cermet ist eine Keramik, in deren Gefüge Metallpartikel eingelagert sind. Bei einer Dispersionskeramik sind in einer Matrix eines Grundmaterials, z.B. in einer Aluminiumoxid-Matrix, Partikel einer anderen Keramik, z.B. Titancarbid, eingelagert.

Derartige Elektroden lassen sich alternativ zu den bei den Metall-Elektroden erwähnten Fügematerialien auch in die entsprechende Ausnehmung einsintern. Auch hier ist bei der Auswahl des Elektroden-Materials im Hinblick auf das Grundkörper-Material auf die einande rmöglichst gleichen thermischen Ausdehnungskoeffizienten dieser Materialien zu achten.

Die Membran 2, 2' bzw. die Membranen 2", 2* lassen sich ebenfalls mit den genannten Fügematerialien auf dem entsprechenden Grundkörper fixieren.

Die Durchkontaktierungen 17, 17', 17", 17*, 17^{#} können z.B. mittels eines in eine jeweils zugehörige Bohrung einegesetzten oder eingesinterten Metallstifts realisiert werden. Alternativ hierzu kann aber auch ein elektrisch leitfähiger Kunststoff verwendet werden.

Dabei reicht es aus, wenn die jeweilige Durchkontaktierung das erste Fügematerial, falls vorhanden, durchstößt und nur gerinfügig in die zugehörige plattenförmige Elektrode an deren Rückseite eindringt; die der entsprechenden Membran-Elektrode zugewandte Oberfläche dieser Elektrode braucht jedenfalls nicht erreicht zu werden, so daß diese keine Unstetigkeitsstelle aufweist.

Bei der Erfindung ist an sich vorausgesetzt, daß eine plattenförmige Elektrode so in die zugehörige Oberfläche des Grundkörpers eingesetzt ist, daß die Elektrode im eingefügten Zustand nicht über die Oberfläche vorsteht. Sollte dies nicht der Fall sein, so kann der vorstehende Teil der Elektrode abgeschliffen werden.

Bei den in den Figuren dargestellten Ausführungsbeispielen sind die Oberfläche der einander gegenüberliegenden Elektroden eben und das jeweilige Fügematerial an der erwähnten Fügestelle bzw. den Fügestellen dient auch dazu, zwischen jeweiliger Membran und jeweiligem Grundkörper einen vorgegebenen und definierten Abstand herzustellen, damit die zugehörigen Elektroden den eingangs erwähnten Kondensator bilden können.

Üblicherweise sind Membran und Grundkörper ringförmig gefügt, so daß eine hermetisch dichte Kammer gebildet ist. Diese wird während der Fügung evakuiert, so daß ein Absolutdruck-Sensor entsteht.

Wenn ein Relativdruck-Sensor geschaffen werden soll oder wenn es sich um Differenzdrucksensoren handelt, wird im Grundkörper bzw. in den Grundkörpern eine jeweilige bis in die Kammer bzw. in die Kammern reichende Bohrung angebracht, so daß die Kammer im Bedarfsfall mit einem Öl gefüllt werden kann.

Der Durchmesser der entsprechenden Teilbohrung im Grundkörper kann dabei größer als der Durchmesser der zugehörigen Teilbohrung in der plattenförmigen Elektrode sein, so daß die Teilbohrung im Grundkörper leicht durch Trockenpressen am erwähnten Grünkörper hergestellt werden kann. Aber auch die Teilbohrung in der plattenförmigen Elektrode läßt sich auf diese Weise herstellen.

Da der kleinste Durchmesser einer durch Trockenpressen am Grünkörper hergestellten Bohrung gleich ca. einem Zehntel der Dicke des Grünkörpers ist und die Dicke der Elektrode ca. 2 mm beträgt, lassen sich in einer keramischen Elektrode sehr feine Bohrungen von ca. 0,2 mm Durchmesser erzeugen.

In die gegenüber dieser Bohrung weitere Teilbohrung des Grundkörpers läßt sich dann zur Verringerung der aufzuwendenden Ölmenge ein vom Öl umspülter Füllkörper einsetzen.

Die Erfindung kann nicht nur bei Drucksensoren bzw. Differenzdrucksensoren mit den erwähnten ebenen Oberflächen der Elektroden angewendet werden, sondern auch bei Drucksensoren bzw. Differenzdrucksensoren, wie sie in der älteren EP-Patent-Anmeldung 98 12 3724.1 vom 14.12.1998 beschrieben sind.

Bei diesen Drucksensoren bzw. Differenzdrucksensoren ist das Wesentliche, daß die der jeweiligen Membran zugewandte Oberfläche des Grundkörpers nicht eben ausgebildet, sondern mit einer konkaven Fläche als Membranbett versehen ist und daß demzufolge Membran und Grundkörper ringförmig aufeinander aufliegen sowie sich berühren und außerhalb dieser Auflagestelle bis hin auf die Umfangsfläche des Grundkörpers gefügt sind.

An das Membranbett legt sich die Membran bei einem maximal zulässigen Druck an und ist somit vor einem Bersten bei höheren Drücken als dem zulässigen Druck geschützt.

Die Anwendung der Erfindung bei Drucksensoren bzw. Differenzdrucksensoren mit dem erwähnten Membranbett erfolgt derart, daß in der freien Oberfläche der in die entsprechende Ausnehmung eingesetzten plattenförmigen Elektrode das Membranbett, z.B. durch Schleifen, gebildet wird. Ferner sind Membran und Grundkörper erst außerhalb der erwähnten ringförmigen Auflagestelle miteinander zu fügen.

## Patentansprüche

1. Kapazitiver Drucksensor (10), der umfaßt:
- einen Grundkörper (1) aus einer Keramik, aus einem Glas oder aus einem einkristallinen Material mit einer ersten und einer zweiten Oberfläche (11, 12) sowie einer Umfangsfläche (13),
- eine plattenförmige erste Elektrode (14) aus einem elektrisch leitfähigen Material,
-- die in einer in der ersten Oberfläche gebildeten Ausnehmung (15) mittels eines ersten Fügematerials (16) hochdruckfest und hochvakuumdicht befestigt ist,
- eine durch den Grundkörper (1) hindurch von der ersten Elektrode (14) zur zweiten Oberfläche (12) oder zur Umfangsfläche (13) führende Durchkontaktierung (17),
- eine Membran (2) aus einer Keramik, aus einem Glas oder aus einem einkristallinen Material, die
-- auf dem Grundkörper (1) außerhalb der Ausnehmung (15) entlang einer Fügestelle (18) mittels eines zweiten Fügematerials (26) befestigt ist und
-- entweder selbst eine zweite Elektrode bildet
-- oder auf einer der ersten Elektrode (14) zugewandten Oberfläche mit einer zweiten Elektrode (24) bedeckt ist,
--- die durch die Fügestelle (18) hindurch kontaktiert ist.

2. Kapazitiver Differenzdrucksensor (10'), der umfaßt:
- einen ersten Grundkörper (1') aus einer Keramik, aus einem Glas oder aus einem einkristallinen Material mit einer ersten und einer zweiten Oberfläche (11', 12') sowie einer Umfangsfläche (13'),
- eine plattenförmige erste Elektrode (14') aus einem elektrisch leitfähigen Material,
-- die in einer in der ersten Oberfläche gebildeten ersten Ausnehmung (15') mittels eines ersten Fügematerials (16') hochdruckfest und hochvakuumdicht befestigt ist,
- eine durch den ersten Grundkörper (1') hindurch von der ersten Elektrode (14') zur zweiten Oberfläche (12') oder zur Umfangsfläche (13') führende erste Durchkontaktierung (17') ,
- einen zweiten Grundkörper (1") aus einer Keramik, aus einem Glas oder aus einem einkristallinen Material mit einer ersten und einer zweiten Oberfläche (11", 12") sowie einer Umfangsfläche (13"),
- eine plattenförmige zweite Elektrode (14") aus einem elektrisch leitfähigen Material,
-- die in einer in der ersten Oberfläche (11") des zweiten Grundkörpers (1") gebildeten zweiten Ausnehmung (15") mittels des ersten Fügematerials (16') hochdruckfest und hochvakuumdicht befestigt ist,
- eine durch den zweiten Grundkörper (1") hindurch von der zweiten Elektrode (14") zu dessen zweiter Oberfläche (12") oder zu dessen Umfangsfläche (13") führende zweite Durchkontaktierung (17"),
- eine Membran (2') aus einer Keramik, aus einem Glas oder aus einem einkristallinen Material, die
-- auf dem ersten Grundkörper (1') außerhalb der ersten Ausnehmung (15') entlang einer ersten Fügestelle (18') mittels eines zweiten Fügematerials (26') befestigt ist,
-- auf dem zweiten Grundkörper (1") außerhalb der zweiten Ausnehmung (15") entlang einer zweiten Fügestelle (18") mittels des zweiten Fügematerials (26') befestigt ist,
-- entweder selbst eine dritte Elektrode bildet
-- oder auf einer der ersten Elektrode (14') zugewandten Oberfläche mit einer dritten Elektrode (34) bedeckt ist,
--- die durch die erste Fügestelle (18') hindurch kontaktiert ist, und
-- auf einer der zweiten Elektrode (14") zugewandten Oberfläche mit einer vierten Elektrode (44) bedeckt ist,
--- die durch die zweite Fügestelle (18") hindurch kontaktiert ist.

3. Kapazitiver Differenzdrucksensor (10"), der umfaßt:
- einen Grundkörper (1*) aus einer Keramik, aus einem Glas oder aus einem einkristallinen Material mit einer ersten und einer zweiten Oberfläche (11*, 12*) sowie einer Umfangsfläche (13*),
- eine plattenförmige erste Elektrode (14*) aus einem elektrisch leitfähigen Material,
-- die in einer in der ersten Oberfläche gebildeten ersten Ausnehmung (15*) mittels eines ersten Fügematerials (16*) hochdruckfest und hochvakuumdicht befestigt ist,
- eine plattenförmige zweite Elektrode (14^{#}) aus einem elektrisch leitfähigen Material,
-- die in einer in der zweiten Oberfläche gebildeten zweiten Ausnehmung (15^{#}) mittels des ersten Fügematerials (16*) hochdruckfest und hochvakuumdicht befestigt ist,
- eine durch den Grundkörper (1*) hindurch von der ersten Elektrode (14*) zur Umfangsfläche (13*) führende erste Durchkontaktierung (17*),
- eine durch den Grundkörper (1*) hindurch von der zweiten Elektrode (14^{#}) zur Umfangsfläche (13*) führende, von der ersten Durchkontaktierung getrennte zweite Durchkontaktierung (17^{#}),
- eine erste Membran (2") aus einer Keramik, aus einem Glas oder aus einem einkristallinen Material, die
-- auf dem Grundkörper (1*) außerhalb der ersten Ausnehmung (15*) entlang einer ersten Fügestelle (18*) mittels eines zweiten Fügematerials (26*) befestigt ist und
-- entweder selbst eine dritte Elektrode bildet
-- oder auf einer der ersten Elektrode (14*) zugewandten Oberfläche mit einer dritten Elektrode (54) bedeckt ist,
--- die durch die erste Fügestelle (18*) hindurch kontaktiert ist, und
- eine zweite Membran (2*) aus einer Keramik, aus einem Glas oder aus einem einkristallinen Material, die
-- auf dem Grundkörper (1*) außerhalb der zweiten Ausnehmung (15^{#}) entlang einer zweiten Fügestelle (18^{#}) mittels des zweiten Fügematerials (26*) befestigt ist und
-- entweder selbst eine vierte Elektrode bildet
-- oder auf einer der zweiten Elektrode (14^{#}) zugewandten Oberfläche mit einer vierten Elektrode (64) bedeckt ist,
--- die durch die zweite Fügestelle (18^{#}) hindurch kontaktiert ist.

4. Drucksensor bzw. Differenzdrucksensor nach einem der Ansprüche 1 bis 3, bei dem die plattenförmige Elektrode (14) bzw. die plattenförmigen Elektroden (14', 14", 14*, 14^{#}) aus einem Metall bestehen, dessen thermischer Ausdehnungskoeffizient an den der Keramik bzw. des Glases bzw. des einkristallinen Materials angepaßt ist.

5. Drucksensor bzw. Differenzdrucksensor nach einem der Ansprüche 1 bis 3, bei dem die plattenförmige Elektrode (14) bzw. die plattenförmigen Elektroden (14', 14", 14*, 14^{#}) aus einer elektrisch leitfähigen Keramik oder einem elektrisch leitfähigen Glas bestehen.

6. Drucksensor bzw. Differenzdrucksensor nach Anspruch 5, bei dem die elektrisch leitfähige Keramik ein Cermet ist.

7. Drucksensor bzw. Differenzdrucksensor nach Anspruch 5, bei dem die elektrisch leitfähige Keramik eine Dispersionskeramik ist.

8. Drucksensor bzw. Differenzdrucksensor nach Anspruch 5, bei dem die plattenförmige Elektrode (14) bzw. die plattenförmigen Elektroden (14', 14", 14*, 14^{#}) aus Siliciumcarbid, Titancarbid, Titannitrid, Titandiborid, Molybdändisilicid, Wolframcarbid oder Zirconiumcarbid bestehen.

9. Drucksensor bzw. Differenzdrucksensor nach einem der Ansprüche 5 bis 8, bei dem die plattenförmige Elektrode (14) bzw. die palttenförmigen Elektroden (14', 14", 14*, 14^{#}) ohne erstes Fügematerial (16, 16', 16*) eingesintert sind.
